# EUROPEAN PATENT APPLICATION

(11) **EP 3 145 208 A1**
(43) Date of publication of application: **22.03.2017**
(21) Application number: 14891705.7
(22) Date of filing: 31.07.2014
(51) Int. Cl.: H04N 21/438

(54) **PROGRAM PLAYING CONTROL METHOD AND DEVICE**

(30) Priority: 15.05.2014 CN 201410206130
(71) Applicant: ZTE Corporation, Shenzhen, Guangdong 518057 (CN)
(72) Inventor: DAI, Chuan, Shenzhen Guangdong 518057 (CN)
(74) Representative: Studio Torta S.p.A.
(86) International application number: PCT/CN2014/083463
(87) International publication number: WO 2015/172438

(57) **Abstract**

Disclosed in the present invention are a program broadcasting control method and a device. The program broadcasting control method includes the following steps: receiving a program switch instruction and current program information played by a broadcasting terminal, and the current program information involves the playing time point and /or the playing code stream key frame of the current program; according to the program switch instruction and the current program information, determining the start playing position of a target program; according to the start playing position of the target program, sending code stream signal to the broadcasting terminal. In the program broadcasting control method provide by the invention, a user can, only required to operate keys for the previous program or the next program, go to the start playing position of the target program. The method overcomes drawbacks in the prior art that the operation is complicated when different programs are switched in the same channel, thereby improving user experience.

## Description

### TECHNICAL FIELD

The present disclosure relates to field of television technology, and more particularly, to a method and device for controlling program broadcasting.

### BACKGROUND

With continuous popularization of IPTV service and continuous increase of amount of the users, the requirements for the IPTV service by the users become increasingly higher. At present, the basic services of IPTV mainly include two types, i.e., live broadcast and on-demand broadcast. The live broadcast service is similar to the channels of traditional televisions, i.e., all the users watch the same program content at the same time. The on-demand service provides a customized service for the user, so as to freely fast-forward and fast-backward, play or pause, and position broadcasting.

The diversity of the service results in complexity of operation, which brings various inconveniences to the usage of the user. When the user watches a channel and wants to re-watch a previous program, how to find the start broadcast time of the program becomes a problem. At present, the commonly-used methods are as follows: 1. finding the start broadcast time point of the program by a fast backward button; 2. pressing a back button and finding the start broadcast time point by looking up a program timing table. However, whatever which of the above methods is used, the user needs to repeatedly operate the button so as to find the start broadcast time point, which increases the complexity of the user operation, and reduces the product experience degree of the user.

### SUMMARY

The main purpose of some implementations of the present disclosure is to provide a method for controlling program broadcasting, which intends to enable the user to switch different programs in the same channel by a simple key operation, thereby improving the experience degree of the user.

In order to realize the purpose of the present disclosure, the present disclosure provides a method for controlling program broadcasting, the method for controlling program broadcasting including the following steps: receiving a program switch instruction and current program information broadcasted by a broadcasting terminal, the current program information containing a broadcasting time point and/or a broadcasting code stream keyframe of a current program; determining a start broadcasting position of a destination program according to the program switch instruction and the current program information; and sending a code stream signal to the broadcasting terminal according to the start broadcasting position of the destination program.

In an embodiment, the determining the start broadcasting position of the destination program according to the program switch instruction and the current program information specifically includes: when the current broadcasting program is a live broadcast service and the program switch instruction is switching to a previous program, entering an on-demand service, and determining a start broadcasting position of the current broadcasting program as the start broadcasting position of the destination program; and when the current broadcasting program is an on-demand service, determining the start broadcasting position of the destination program according to the program switch instruction and the current program information.

In an embodiment, the determining the start broadcasting position of the destination program specifically includes: acquiring a broadcasting time point of the current program according to the current program information; and determining the start broadcasting position of the destination program according to the broadcasting time point of the current program and the program switch instruction with reference to a preset program time table.

In an embodiment, the determining the start broadcasting position of the destination program specifically includes: acquiring a broadcasting code stream keyframe of the current program according to the current program information; and determining the start broadcasting position of the destination program according to the broadcasting code stream keyframe of the current program and the program switch instruction with reference to a preset program time table.

In an embodiment, the program switch instruction specifically includes an instruction for switching to a previous program and an instruction for switching to a next program.

The present disclosure also provides a device for controlling program broadcasting, the device for controlling program broadcasting including: a receiving module configured to receive a program switch instruction and current program information broadcasted by a broadcasting terminal, the current program information containing a broadcasting time point and/or a broadcasting code stream keyframe of a current program; a positioning module configured to determine a start broadcasting position of a destination program according to the program switch instruction and the current program information; and a sending module configured to send a code stream signal to the broadcasting terminal according to the start broadcasting position of the destination program.

In an embodiment, the positioning module further includes: a first positioning submodule configured to, when the current broadcasting program is a live broadcast service and the program switch instruction is switching to a previous program, enter an on-demand service, and determine a start broadcasting position of the current broadcasting program as the start broadcasting position of the destination program; and a second positioning submodule configured to, when the current broadcasting program is an on-demand service, determine the start broadcasting position of the destination program according to the program switch instruction and the current program information.

In an embodiment, the first positioning submodule and the second positioning submodule specifically include: a broadcasting time point acquiring unit configured to acquire a broadcasting time point of the current program according to the current program information; and a first positioning unit configured to determine the start broadcasting position of the destination program according to the broadcasting time point of the current program and the program switch instruction with reference to a preset program time table.

In an embodiment, the first positioning submodule and the second positioning submodule specifically include: a code stream keyframe acquiring unit configured to acquire a broadcasting code stream keyframe of the current program according to the current program information; and a second positioning unit configured to determine the start broadcasting position of the destination program according to the broadcasting code stream keyframe of the current program and the program switch instruction with reference to a preset program time table.

In an embodiment, the program switch instruction specifically includes an instruction for switching to a previous program and an instruction for switching to a next program.

In the present disclosure, a program switch instruction and current program information broadcasted by a broadcasting terminal are received; information, such as the broadcasting time point or the broadcasting code stream keyframe of the current program, is acquired according to the received current program information; whether the user needs to switch the program to the program previous to the current program or switch to the next program of the current program is acquired according to the received program switch instruction; then the start broadcasting position of the destination program is further determined; and after determining the start broadcasting position of the destination program, the code stream signal corresponding to the position is sent to the broadcasting terminal and is broadcasted by the broadcasting terminal. Through the above method for controlling program broadcasting, only by operating the key of previous program or next program, the user can position the start broadcasting position of the destination program. The method overcomes the deficiency of complex operation when switching among different programs in the same channel in the related art, thereby improving the user experience.

### BRIEF DESCRIPTION OF THE DRAWINGS

Fig. 1 is a flowchart of an embodiment of a method for controlling program broadcasting according to the present disclosure;
Fig. 2 is a flowchart of another embodiment of a method for controlling program broadcasting according to the present disclosure;
Fig. 3 is a flowchart of an embodiment of determining a start broadcasting position of a destination program in the method for controlling program broadcasting according to the present disclosure;
Fig. 4 is a flowchart of another embodiment of determining a start broadcasting position of a destination program in the method for controlling program broadcasting according to the present disclosure;
Fig. 5 is a structural diagram of an embodiment of the device for controlling program broadcasting according to the present disclosure;
Fig. 6 is a structural diagram of an embodiment of the positioning module shown in Fig. 5;
Fig. 7 is a structural diagram of an embodiment of the first positioning submodule shown in Fig. 6; and
Fig. 8 is a structural diagram of another embodiment of the first positioning submodule shown in Fig. 6.

The implementation of the purpose, function features, and advantages of the present disclosure will be further explained in combination with embodiments by referring to the drawings.

### DETAILED DESCRIPTION

It should be appreciated that the specific embodiments described herein are only used for explaining the present disclosure, rather than restricting the present disclosure.

The present disclosure provides a method for controlling program broadcasting.

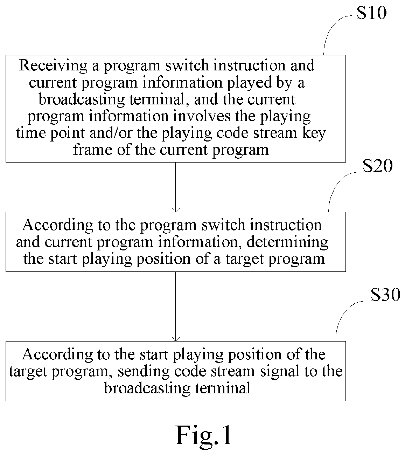

Fig. 1 is a flowchart of an embodiment of a method for controlling program broadcasting according to the present disclosure. With reference to Fig. 1, the present embodiment provides a method for controlling program broadcasting, which includes the following steps. In step S10, a program switch instruction and current program information broadcasted by a broadcasting terminal are received, the current program information containing a broadcasting time point and/or a broadcasting code stream keyframe of a current program. The above method for controlling program broadcasting is used for switching different programs in a same channel. The program switch instruction may be switching to a previous program or switching to a next program in the same channel. The current program information contains the broadcasting time point or the broadcasting code stream keyframe of the current program, or contains the broadcasting time point and the broadcasting code stream keyframe of the current program at the same time. The program switch instruction may be implemented as follows: a program switch request is sent by a remote controller to a set top box, and then the set top box sends the program switch instruction according to the program switch request. It should be noted that the program switch instruction may also be sent by a terminal which is able to perform data interaction with the device for implementing the method for controlling program broadcasting, such as a mobile phone terminal. The current program information broadcasted by the broadcasting terminal may be acquired by the set top box, or may be acquired by the device for implementing the method for controlling program broadcasting. It should be noted that the remote controller may be added with two keys for switching to a previous program and switching to a next program on the original basis. The user presses a button to send a corresponding program switch instruction. In addition, the remote controller may not be provided with the keys for switching to the previous program and switching to the next program separately, instead, the remote controller may reuse the original keys. For example, double-clicking a channel increasing key may send the program switch instruction for switching to the previous program, and double-clicking a channel decreasing key may send the program switch instruction for switching to the next program.

In the present embodiment, the user sends the program request information to the set top box via the remote controller. The set top box acquires the program switch instruction according to the program request information. The set top box also acquires the current program information broadcasted by the broadcasting terminal. The set top box sends the program switch instruction and the current program information broadcasted by the broadcasting terminal to the device for implementing the method for controlling program broadcasting. The device receives the program switch instruction and the current program information.

For example, in channel A, the program broadcasted from 7:00 to 8:00 is Morning News, the program broadcasted from 8:00 to 9:00 is Animal World, and the program broadcasted from 9:00 to 10:00 is Children's Theatre. When the user is watching the Animal World broadcasted in channel A yesterday, if he/she desires to watch the program of Morning News broadcasted yesterday, the user may send the program switch request for switching to the previous program to the set top box via the remote controller. The set top box obtains the program switch instruction for switching to the previous program according to the program switch request, and sends the program switch instruction and the current program information broadcasted by the broadcasting terminal to the device for implementing the method for controlling program broadcasting.

In step S20, a start broadcasting position of a destination program is determined according to the program switch instruction and the current program information.

In the present embodiment, the program needing to be watched by the user is defined as the destination program. When switching to the destination program, the broadcasting position is directly positioned to the start broadcasting position of the destination program, such that the broadcasting terminal starts to broadcast from the start position of the program. The step of determining the start broadcasting position of the destination program is particularly as follows: first, determining the current program information, which is specifically such as a broadcasting time point or a broadcasting code stream keyframe of the current program; then determining the destination program in combination with the program switch instruction; and finally determining the start broadcasting position of the destination program.

In step S30, a code stream signal is sent to the broadcasting terminal according to the start broadcasting position of the destination program.

In the present embodiment, after determining the start broadcasting position of the destination program, the code stream signal corresponding to this position is sent to the broadcasting terminal. The broadcasting terminal receives the code stream signal and broadcasts it.

In the present disclosure, a program switch instruction and current program information broadcasted by a broadcasting terminal are received; information, such as the broadcasting time point or the broadcasting code stream keyframe of the current program, is acquired according to the received current program information; whether the user needs to switch the program to the program previous to the current program or switch to the next program of the current program is acquired according to the received program switch instruction; then the start broadcasting position of the destination program is further determined; and after determining the start broadcasting position of the destination program, the code stream signal corresponding to the position is sent to the broadcasting terminal and is broadcasted by the broadcasting terminal. Through the above method for controlling program broadcasting, only by operating the key of previous program or next program, the user can position the start broadcasting position of the destination program. The method overcomes the deficiency of complex operation when switching among different programs in the same channel in the related art, thereby improving the user experience.

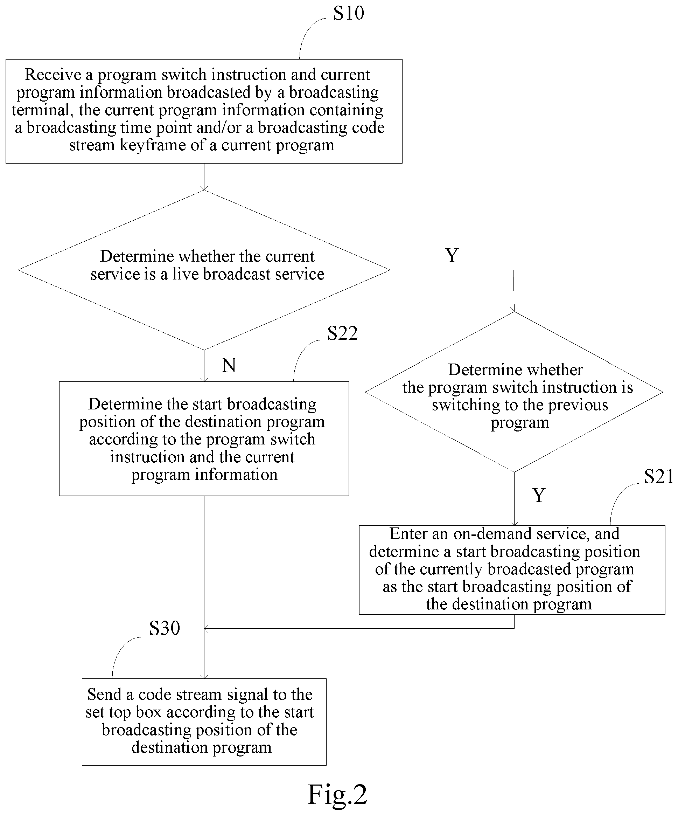

Fig. 2 is a flowchart of another embodiment of a method for controlling program broadcasting according to the present disclosure. In combination with Fig. 2, further, based on the above embodiment, in the present embodiment, the step S20 specifically includes the following steps.

In step S21, when the current broadcasting program is a live broadcast service and the program switch instruction is switching to a previous program, an on-demand service is entered, and a start broadcasting position of the current broadcasting program is determined as the start broadcasting position of the destination program.

In step S22, when the current broadcasting program is an on-demand service, the start broadcasting position of the destination program is determined according to the program switch instruction and the current program information.

It should be noted that the current program broadcasted by the broadcasting terminal may be a live broadcast service or an on-demand service. The live broadcast service is a program being broadcasted in this channel. The on-demand service is a program which has been lively broadcasted in this channel. For example, the Morning News broadcasted on every morning in channel A is the live broadcast service, and the Morning News broadcasted on yesterday morning in channel A is the on-demand service.

In the present embodiment, if the broadcasting terminal broadcasts the live broadcast service, and the program switch instruction is switching to the previous program, the live broadcast service is closed via RTSP signaling, the on-demand service is entered, and the live broadcast program is used as the destination program. The start broadcasting position of the live broadcast program is the start broadcasting position of the destination program. If the user needs to watch the program previous to the live broadcast program, he/she may continue to send the program switch instruction for switching to the previous program. It should be noted that in order to avoid the deficiency of being unable to position to the program which is desired to be watched by the user due to that the destination program is always the live broadcast program, first, a buffer time is preset, and when a time interval between receiving the program switch instruction for the first time and receiving the program switch instruction for the second time is smaller than the buffer time, the previous program of the live broadcast program is the destination program. The start broadcasting position of the previous program of the live broadcast program is the start broadcasting position of the destination program. When the time interval between receiving the program switch instruction for the first time and receiving the program switch instruction for the second time is greater than the buffer time, the live broadcast program is the destination program. The start broadcasting position of the live broadcast program is the start broadcasting position of the destination program.

It should be noted that the above buffer time may be set according to the user's requirement. Further, it should be noted that the current service is a live broadcast service, and when the program switch instruction is switching to the next program, the system reports an error, and the current live broadcast program is continued to be broadcasted.

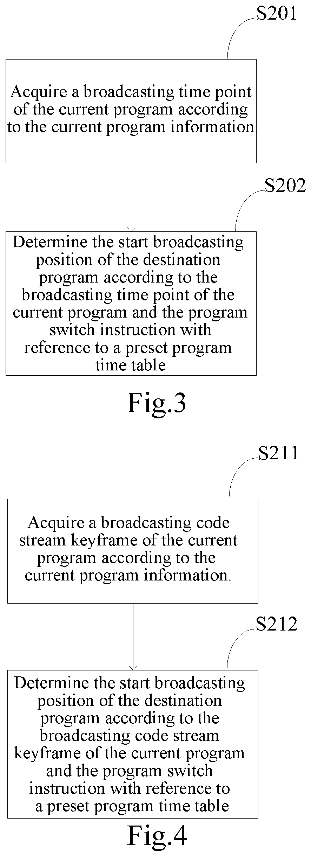

Fig. 3 is a flowchart of an embodiment of determining a start broadcasting position of a destination program in the method for controlling program broadcasting according to the present disclosure. In combination with Fig. 3, further, the step of determining the start broadcasting position of the destination program specifically includes the following steps.

In step S201, a broadcasting time point of the current program is acquired according to the current program information.

In step S202, the start broadcasting position of the destination program is determined according to the broadcasting time point of the current program and the program switch instruction with reference to a preset program time table.

In the present embodiment, the start broadcasting position of the destination program is determined by the broadcasting timing of the current program and the program switch instruction. It should be noted that the device is pre-stored with a program timing table of this channel. The program timing table specifically records broadcasting time periods of respective programs in this channel. In detail, the broadcasting time point of the current program is acquired according to the current program information, and the position of the current program is determined in the program time table according to the broadcasting time point of the current program. Then the start broadcasting position of the destination program is determined according to the program switch instruction. If the current broadcast is a live broadcast service, and the program switch instruction is switching to the previous program, the start broadcasting position of the live broadcast program is the start broadcasting position of the destination program. If the current broadcast is the on-demand service, the destination program is determined in the program timing table according to the program switch instruction, and then the start broadcasting position of the destination program is determined. Fig. 4 is a flowchart of another embodiment of determining a start broadcasting position of a destination program in the method for controlling program broadcasting according to the present disclosure. In combination with Fig. 4, further, the step of determining the start broadcasting position of the destination program specifically includes the following steps.

In step S211, a broadcasting code stream keyframe of the current program is acquired according to the current program information.

In step S212, the start broadcasting position of the destination program is determined according to the broadcasting code stream keyframe of the current program and the program switch instruction with reference to a preset program time table.

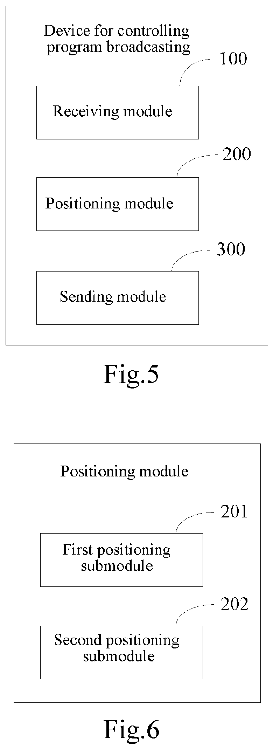

In the present embodiment, the start broadcasting position of the destination program is determined by the broadcasting code stream keyframe of the current program and the program switch instruction. In particular, the position broadcasted by the current program is acquired by the code stream keyframe, and is compared with the pre-stored program timing table in the device, so as to determine the destination program. Then, the start broadcasting position of the destination program is determined according to the program timing table. Fig. 5 is a structural diagram of an embodiment of the device for controlling program broadcasting according to the present disclosure. The present embodiment further provides a device for controlling program broadcasting, and the device for controlling program broadcasting includes: a receiving module 100, a positioning module 200, and a sending module 300.

The receiving module 100 is configured to receive a program switch instruction and current program information broadcasted by a broadcasting terminal, the current program information containing a broadcasting time point and/or a broadcasting code stream keyframe of a current program.

The above method for controlling program broadcasting is used for switching different programs in a same channel. The program switch instruction may be switching to a previous program or switching to a next program in the same channel. The current program information contains a broadcasting time point or a broadcasting code stream keyframe of the current program, or contains the broadcasting time point and the broadcasting code stream keyframe of the current program at the same time. The program switch instruction may be implemented as follows: a program switch request is sent by a remote controller to a set top box, and then the set top box sends the program switch instruction according to the program switch request. It should be noted that the program switch instruction may also be sent by a terminal which is able to perform data interaction with the device for implementing the method for controlling program broadcasting, such as a mobile phone terminal. The current program information broadcasted by the broadcasting terminal may be acquired by the set top box, or may be acquired by the device for implementing the method for controlling program broadcasting. It should be noted that the remote controller may be added with two keys for switching to a previous program and switching to a next program on the original basis. The user presses a button to send a corresponding program switch instruction. In addition, the remote controller may not be provided with the keys for switching to the previous program and switching to the next program separately, instead, the remote controller may reuse the original keys. For example, double-clicking the channel increasing key may send the program switch instruction for switching to the previous program, and double-clicking a channel decreasing key may send the program switch instruction for switching to the next program. In the present embodiment, the user sends the program request information to the set top box via the remote controller. The set top box acquires the program switch instruction according to the program request information. The set top box also acquires the current program information broadcasted by the broadcasting terminal. The set top box sends the program switch instruction and the current program information broadcasted by the broadcasting terminal to the device for implementing the method for controlling program broadcasting. The device receives the program switch instruction and the current program information.

For example, in channel A, the program broadcasted from 7:00 to 8:00 is Morning News, the program broadcasted from 8:00 to 9:00 is Animal World, and the program broadcasted from 9:00 to 10:00 is Children's Theatre. When the user is watching the Animal World broadcasted in channel A yesterday, if he/she desires to watch the program of Morning News broadcasted yesterday, the user may send the program switch request for switching to the previous program to the set top box via the remote controller. The set top box obtains the program switch instruction for switching to the previous program according to the program switch request, and sends the program switch instruction and the current program information broadcasted by the broadcasting terminal to the device for implementing the method for controlling program broadcasting.

The positioning module 200 is configured to determine a start broadcasting position of a destination program according to the program switch instruction and the current program information.

In the present embodiment, the program needing to be watched by the user is defined as the destination program. When being switched to the destination program, the broadcasting position is directly positioned to the start broadcasting position of the destination program, such that the broadcasting terminal starts to broadcast from the start position of the program. The step of determining the start broadcasting position of the destination program is particularly as follows: first, determining the current program information, which is specifically such as a broadcasting time point or a broadcasting code stream keyframe of the current program; then determining the destination program in combination with the program switch instruction; and finally determining the start broadcasting position of the destination program.

The sending module 300 is configured to send a code stream signal to the broadcasting terminal according to the start broadcasting position of the destination program.

In the present embodiment, after determining the start broadcasting position of the destination program, the code stream signal corresponding to this position is sent to the broadcasting terminal. The broadcasting terminal receives the code stream signal and broadcasts it.

In the present disclosure, a program switch instruction and current program information broadcasted by a broadcasting terminal are received; information, such as the broadcasting time point or the broadcasting code stream keyframe of the current program, is acquired according to the received current program information; whether the user needs to switch the program to the program previous to the current program or switch to the next program of the current program is acquired according to the received program switch instruction; then the start broadcasting position of the destination program is further determined; and after determining the start broadcasting position of the destination program, the code stream signal corresponding to the position is sent to the broadcasting terminal and is broadcasted by the broadcasting terminal. Through the above method for controlling program broadcasting, only by operating the key of previous program or next program, the user can position the start broadcasting position of the destination program. The method overcomes the deficiency of complex operation when switching among different programs in the same channel in the related art, thereby improving the user experience.

Fig. 6 is a structural diagram of an embodiment of the positioning module shown in Fig. 5. In combination with Fig. 6, further, on the basis of the above embodiments, the positioning module specifically includes: a first positioning submodule 201, and a second positioning submodule 202.

The first positioning submodule 201 is configured to, when the current broadcasting program is a live broadcast service and the program switch instruction is switching to a previous program, enter an on-demand service, and determine a start broadcasting position of the current broadcasting program as the start broadcasting position of the destination program. The second positioning submodule 202 is configured to, when the current broadcasting program is an on-demand service, determine the start broadcasting position of the destination program according to the program switch instruction and the current program information.

It should be noted that the current program broadcasted by the broadcasting terminal may be a live broadcast service or an on-demand service. The live broadcast service is a program being broadcasted in this channel. The on-demand service is a program which has been lively broadcasted in this channel. For example, the Morning News broadcasted on every morning in channel A is the live broadcast service, and the Morning News broadcasted on yesterday morning in channel A is the on-demand service.

In the present embodiment, if the broadcasting terminal broadcasts the live broadcast service, and the program switch instruction is switching to the previous program, the live broadcast service is closed via RTSP signaling, the on-demand service is entered, and the live broadcast program is used as the destination program. The start broadcasting position of the live broadcast program is the start broadcasting position of the destination program. If the user needs to watch the program previous to the live broadcast program, he/she may continue to send the program switch instruction for switching to the previous program. It should be noted that in order to avoid the deficiency of being unable to position to the program which is desired to be watched by the user due to that the destination program is always the live broadcast program, first, a buffer time is preset, and when a time interval between receiving the program switch instruction for the first time and receiving the program switch instruction for the second time is smaller than the buffer time, the previous program of the live broadcast program is the destination program. The start broadcasting position of the previous program of the live broadcast program is the start broadcasting position of the destination program. When the time interval between receiving the program switch instruction for the first time and receiving the program switch instruction for the second time is greater than the buffer time, the live broadcast program is the destination program. The start broadcasting position of the live broadcast program is the start broadcasting position of the destination program.

It should be noted that the above buffer time may be set according to the user's requirement. Further, it should be noted that the current service is a live broadcast service, and when the program switch instruction is switching to the next program, the system reports an error, and the current live broadcast program is continued to be broadcasted.

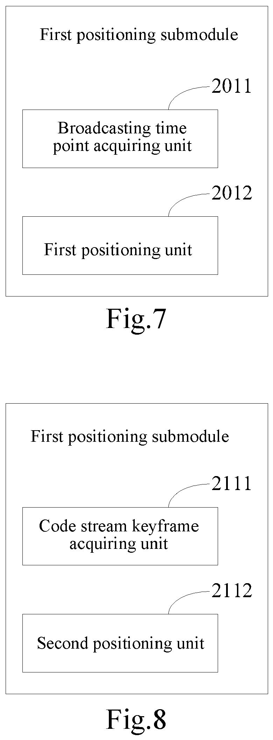

Fig. 7 is a structural diagram of an embodiment of the first positioning submodule shown in Fig. 6. It should be noted that the second positioning submodule 202 has the same specific structure as the first positioning submodule 201. With reference to Fig. 7, the second positioning submodule 202 is explained. Further, the first positioning submodule 201 and the second positioning submodule 202 include: a broadcasting time point acquiring unit 2011, and a first positioning unit 2012.

The broadcasting time point acquiring unit 2011 is configured to acquire a broadcasting time point of the current program according to the current program information.

The first positioning unit 2012 is configured to determine the start broadcasting position of the destination program according to the broadcasting time point of the current program and the program switch instruction with reference to a preset program time table.

In the present embodiment, the start broadcasting position of the destination program is determined by the broadcasting timing of the current program and the program switch instruction. It should be noted that the device is pre-stored with a program timing table of this channel. The program timing table specifically records broadcasting time periods of respective programs in this channel. In detail, the broadcasting time point of the current program is acquired according to the current program information, and the position of the current program is determined in the program time table according to the broadcasting time point of the current program. Then the start broadcasting position of the destination program is determined according to the program switch instruction. If the current broadcast is a live broadcast service, and the program switch instruction is switching to the previous program, the start broadcasting position of the live broadcast program is the start broadcasting position of the destination program. If the current broadcast is the on-demand service, the destination program is determined in the program timing table according to the program switch instruction, and then the start broadcasting position of the destination program is determined. Fig. 8 is a structural diagram of another embodiment of the first positioning submodule shown in Fig. 6. It should be noted that the second positioning submodule 202 has the same specific structure as the first positioning submodule 201. With reference to Fig. 8, the second positioning submodule 202 is explained. Further, the first positioning submodule 201 and the second positioning submodule 202 may also include: a code stream keyframe acquiring unit 2111, and a second positioning unit 2112.

The code stream keyframe acquiring unit 2111 is configured to acquire a broadcasting code stream keyframe of the current program according to the current program information.

The second positioning unit 2112 is configured to determine the start broadcasting position of the destination program according to the broadcasting code stream keyframe of the current program and the program switch instruction with reference to a preset program time table.

In the present embodiment, the start broadcasting position of the destination program is determined by the broadcasting code stream keyframe of the current program and the program switch instruction. In particular, the position broadcasted by the current program is acquired by the code stream keyframe, and is compared with the pre-stored program timing table in the device, so as to determine the destination program. Then, the start broadcasting position of the destination program is determined according to the program timing table.

The above contents are only the preferred embodiments of the present disclosure, rather than restricting the patent scope of the present disclosure. All the equivalent structures or equivalent flow changes made by utilizing the description and drawings of the present disclosure, or applied directly or indirectly on other relevant technical fields, are included in the patent protection scope of the present disclosure.

### Industrial applicability

As mentioned above, the above embodiments and preferred embodiments can have the following effects: by the above method for controlling program broadcasting, only by operating a previous program key or a next program key, the user can position to the start broadcasting position of the destination program. This method overcomes the deficiency of complex operation when switching among different programs in the same channel in the related art, thereby improving the user experience.

## Claims

1. A method for controlling program broadcasting, comprising:
receiving a program switch instruction and current program information broadcasted by a broadcasting terminal, the current program information containing a broadcasting time point and/or a broadcasting code stream keyframe of a current program;
determining a start broadcasting position of a destination program according to the program switch instruction and the current program information; and
sending a code stream signal to the broadcasting terminal according to the start broadcasting position of the destination program.

2. The method for controlling program broadcasting of claim 1, wherein the determining the start broadcasting position of the destination program according to the program switch instruction and the current program information comprises:
when the current broadcasting program is a live broadcast service and the program switch instruction is switching to a previous program, entering an on-demand service, and determining a start broadcasting position of the current broadcasting program as the start broadcasting position of the destination program; and
when the current broadcasting program is an on-demand service, determining the start broadcasting position of the destination program according to the program switch instruction and the current program information.

3. The method for controlling program broadcasting of claim 2, wherein the determining the start broadcasting position of the destination program comprises:
acquiring a broadcasting time point of the current program according to the current program information; and
determining the start broadcasting position of the destination program according to the broadcasting time point of the current program and the program switch instruction with reference to a preset program time table.

4. The method for controlling program broadcasting of claim 2, wherein the determining the start broadcasting position of the destination program comprises:
acquiring a broadcasting code stream keyframe of the current program according to the current program information; and
determining the start broadcasting position of the destination program according to the broadcasting code stream keyframe of the current program and the program switch instruction with reference to a preset program time table.

5. The method for controlling program broadcasting of any of claims 1 to 4, wherein the program switch instruction comprises an instruction for switching to a previous program and an instruction for switching to a next program.

6. A device for controlling program broadcasting, comprising:
a receiving module configured to receive a program switch instruction and current program information broadcasted by a broadcasting terminal, the current program information containing a broadcasting time point and/or a broadcasting code stream keyframe of a current program;
a positioning module configured to determine a start broadcasting position of a destination program according to the program switch instruction and the current program information; and
a sending module configured to send a code stream signal to the broadcasting terminal according to the start broadcasting position of the destination program.

7. The device for controlling program broadcasting of claim 6, wherein the positioning module further comprises:
a first positioning submodule configured to, when the current broadcasting program is a live broadcast service and the program switch instruction is switching to a previous program, enter an on-demand service, and determine a start broadcasting position of the current broadcasting program as the start broadcasting position of the destination program; and
a second positioning submodule configured to, when the current broadcasting program is an on-demand service, determine the start broadcasting position of the destination program according to the program switch instruction and the current program information.

8. The device for controlling program broadcasting of claim 7, wherein the first positioning submodule and the second positioning submodule comprise:
a broadcasting time point acquiring unit configured to acquire a broadcasting time point of the current program according to the current program information; and
a first positioning unit configured to determine the start broadcasting position of the destination program according to the broadcasting time point of the current program and the program switch instruction with reference to a preset program time table.

9. The device for controlling program broadcasting of claim 7, wherein the first positioning submodule and the second positioning submodule comprise:
a code stream keyframe acquiring unit configured to acquire a broadcasting code stream keyframe of the current program according to the current program information; and
a second positioning unit configured to determine the start broadcasting position of the destination program according to the broadcasting code stream keyframe of the current program and the program switch instruction with reference to a preset program time table.

10. The device for controlling program broadcasting of any of claims 6 to 9, wherein the program switch instruction comprises an instruction for switching to a previous program and an instruction for switching to a next program.
